# DEMANDE DE BREVET EUROPEEN

(11) **EP 1 615 137 A2**
(43) Date de publication de la demande: **11.01.2006**
(21) Numéro de dépôt: 05105926.9
(22) Date de dépôt: 30.06.2005
(51) Int. Cl.: G06F 15/02, G06F 7/10

(54) **Dispositif personnel programmable sécurisé de stockage et de restitution de données**

(30) Priorité: 08.07.2004 FR 0451479
(71) Demandeur: Lucchina, Pascal, F-33200 Bordeaux (FR); Checcaroni, Stéphane, 06000 Nice (FR)
(72) Inventeur: Lucchina, Pascal, F-33200 Bordeaux (FR); Checcaroni, Stéphane, 06000 Nice (FR)
(74) Mandataire: Schmit, Christian Norbert Marie

(57) **Abrégé**

L'objet de l'invention est un dispositif programmable sécurisé de stockage et de restitution de données comportant un boîtier (1) pourvu de moyens de saisie (2), de moyens de mémorisation (3a, 3b, 3c), de moyens de traitement (4) des données et de moyens de restitution de données (5, 6, 16, 36), pourvu en outre de moyens de liaison (7) entre lesdits moyens de saisie (2), de mémorisation (3a, 3b, 3c), de traitement (4) et de restitution de données (5, 6, 16, 36), caractérisé en ce qu'il comprend des moyens d'activation temporaire des moyens de restitution de données (5, 6, 16, 36).

## Description

La présente invention concerne un dispositif personnel programmable sécurisé de stockage et de restitution de données, notamment de données personnelles.

L'accroissement de l'utilisation de l'informatique, des moyens de paiement par carte et des possibilités de consultation de données en ligne imposent de plus en plus de pouvoir sécuriser l'accès aux données personnelles des utilisateurs.

L'utilisation des cartes de crédit, de débit ou autres impose de connaître des codes confidentiels, les sites de banques en ligne et de consultation de comptes ainsi que d'autres services accessibles depuis internet ou à partir de bornes interactives nécessitent la saisie de codes d'accès et permettent de plus en plus d'opérations.

Les utilisateurs de ces services sont dans l'obligation de mémoriser de nombreux codes et, pour des raisons évidentes de sécurité, ne peuvent inscrire ces codes sur un support écrit accessible à des tiers et doivent en garantir la sécurité.

La présente invention a pour but de proposer un dispositif programmable sécurisé de stockage et de restitution de données permettant de manière simple à un utilisateur de stocker des données numériques et/ou alphanumériques telles qu'identifiants d'organismes, numéros de comptes, codes de cartes de crédit ou tout autre numéro et code à tenir secret et de les restituer de façon sécurisée sans risque d'accès par un tiers.

Pour ce faire la présente invention concerne un dispositif programmable sécurisé de stockage et de restitution de données comportant un boîtier pourvu de moyens de saisie, de moyens internes de mémorisation et de traitement des données ainsi que des moyens de restitution des données, caractérisé en ce qu'il comprend des moyens d'activation et de désactivation temporaire des moyens de restitution de données.

Le dispositif selon l'invention permet ainsi de mémoriser plusieurs codes ou groupes de données confidentielles tout en garantissant une confidentialité importante à ces données lors de leur restitution à partir d'un code unique les protégeant.

Selon l'invention, les moyens de restitution de données peuvent notamment comprendre seuls ou en combinaison un afficheur, un générateur d'impulsions tactiles, une liaison externe, un générateur audio, éventuellement combinés avec une ou plusieurs touches particulières de validation.

Selon un premier mode de réalisation, les moyens d'activation temporaire comprennent des moyens de détection par les moyens de traitement d'une séquence de codes entrée sur les moyens de saisie, la comparaison par les moyens de traitement de ladite séquence à une séquence mémorisée dans les moyens de mémorisation et l'activation des moyens de restitution par les moyens de traitement uniquement sur reconnaissance par les moyens de traitement de l'identité entre la séquence de codes entrés et la séquence de codes mémorisée.

Selon un deuxième mode de réalisation alternatif ou complémentaire au premier, les moyens d'activation temporaire comprennent des moyens de détection d'appui sur au moins une touche particulière du dispositif reliée aux moyens de traitement, lesdits moyens de détection d'appui ne permettant la restitution de données mémorisées par les moyens de restitution que pendant l'appui sur ladite touche particulière.

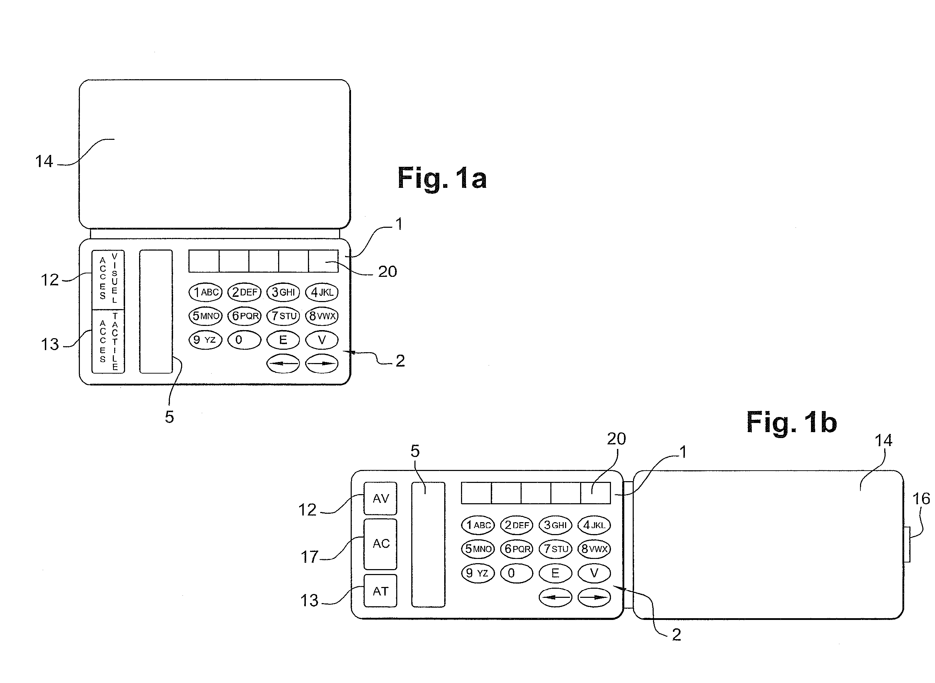

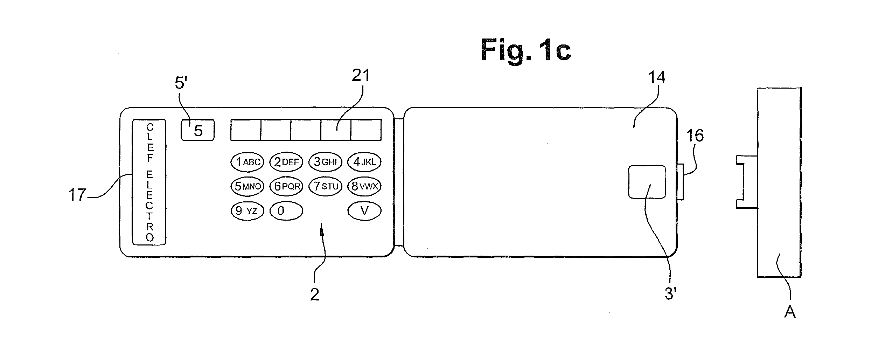

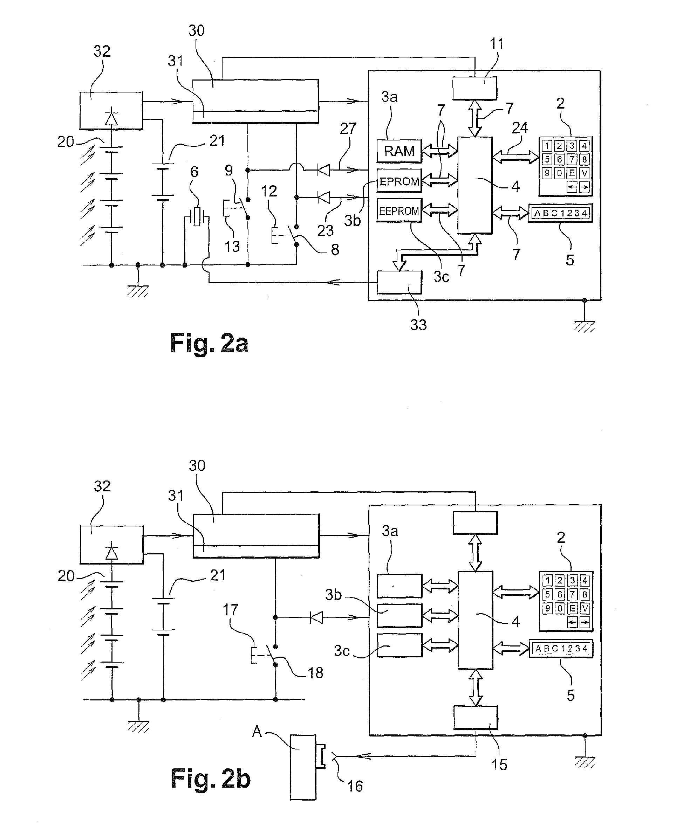

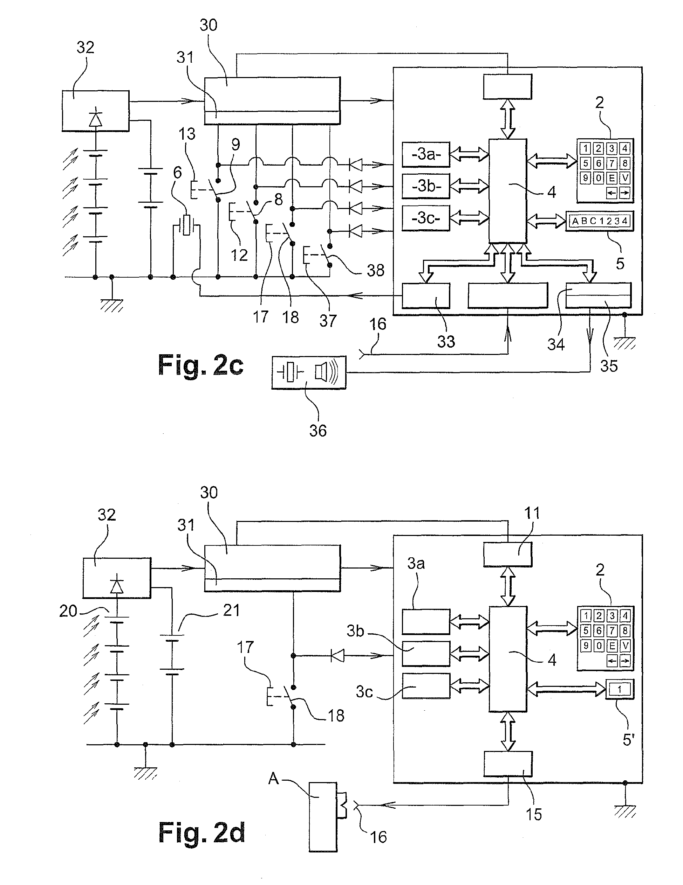

D'autres avantages et caractéristiques de l'invention seront mieux compris à la lecture de la description qui va suivre d'un exemple de réalisation non limitatif de l'invention en référence aux figures qui représentent:
En figures 1 a, 1b et 1c: des vues du dessus d'exemples de réalisation d'un boîtier conforme à l'invention;
En figure 2a, 2b, 2c, 2d: des schémas électroniques représentant les composants de boîtiers selon l'invention.

Le dispositif programmable sécurisé de stockage et de restitution de données représenté à la figure 1a comporte un boîtier 1, d'un format carte de crédit qui est selon l'exemple, pourvu d'un volet de protection 14 qui se rabat sur la face supérieure du boîtier.

La face avant du boîtier 1 est pourvue de moyens de saisie 2, sous forme d'un clavier à touches numériques et alphanumériques compact, d'un afficheur 5, par exemple un écran à cristaux liquides permettant l'affichage de 7 caractères alphanumériques et de cellules photoélectriques d'alimentation 20 du boîtier.

Dans le boîtier, se trouve une carte électronique dont plusieurs variantes sont schématisées en figure 2a pour la version de la figure 1 a, en figure 2b pour une variante à voie de liaison externe, en figure 2c pour une version cumulant l'ensemble des fonction et en figure 2d pour une variante simplifiée utilisable comme clé d'accès.

Pour éviter toute dégradation et toute tentative de démontage ou d'accès aux cartes électroniques, ces dernières sont noyée dans un matériau d'encapsulage dans le boîtier.

En commun entre les diverses variantes, la carte électronique comporte des moyens de mémorisation: de type mémoire vive 3a, de type mémoire permanente 3b contenant le programme du dispositif, de type mémoire reprogrammable 3c contenant les données de l'utilisateur telle qu'une mémoire morte électriquement programmable ou reprogrammable. Le dispositif comporte en outre des moyens de traitement 4, par exemple microprocesseur ou microcontrôleur.

Dans une version fortement intégrée, les moyens de mémorisation et de traitement sont combinés dans une puce électronique ou dans un circuit processeur spécialisé.

Ceci est notamment le cas pour les applications sécurisées du dispositif pour lesquelles les moyens de traitement et de mémorisation sont combinés et intégrés dans une puce électronique sécurisée et pourvue de moyens de cryptage.

Outre ces moyens de traitement 4 et de mémorisation 3a, 3b, 3c, le boîtier comprend des moyens de restitution de données reliés aux moyens de traitement sur la carte qui seront explicités plus loin.

Le dispositif comprend enfin divers composants et notamment des moyens de saisie 2, de gestion d'alimentation 30, 31, 32, l'ensemble des moyens électroniques étant reliés par des moyens de liaison 7 réalisés par des pistes de circuit imprimé rigide ou souple.

Pour réaliser le dispositif, les touches constituant les moyens de saisie 2 peuvent être des contacts réalisés par circuits souples ou des contacts sensitifs.

Un principe général de l'invention est de sécuriser la saisie de codes confidentiels en permettant à l'utilisateur de les taper à l'insu de tout regard indiscret.

En outre divers modes de réalisation de l'invention sont prévus pour ne restituer les codes mémorisés que suite à la saisie préalable d'un code secret et ce, dans un temps d'interrogation limité et contrôlé par des moyens d'activation temporaire de moyens de restitution de données.

L'utilisation du dispositif à code secret dans le cadre de l'exemple de la figure 1 a est expliqué ci-après.

Ce dispositif est basé sur un code secret mémorisé lors d'une première utilisation du dispositif.

Le code est un code confidentiel unique choisi par l'utilisateur. Il est caractérisé par des symboles alphabétiques et/ou numériques. Pour une sécurité accrue par rapport aux codes traditionnels de type code de carte bancaire à 4 chiffres, ce code peut comporter 7 caractères.

Ce code est entré en une fois par une séquence de première activation de la carte. Ce code, stocké dans un espace de mémorisation permanent sécurisé du dispositif, par exemple la mémoire programmable 3c, et éventuellement crypté, n'apparaît plus lors de l'utilisation du dispositif et est masqué par l'affichage d'étoiles sur l'afficheur 5 constituant l'un des moyens de restitution des données.

L'exemple de réalisation représenté en figures 1 a fait apparaître sur le clavier 2 une touche "E". Cette touche est utilisée lors de la première mise en service de la carte pour déclencher la séquence d'enregistrement du code.

La séquence est effectuée comme suit:
Appuyer sur la touche "E", la mention "CC" s'affiche alors à l'écran pour inviter l'utilisateur à saisir son code confidentiel.

Lors de la première saisie, le code s'affiche puis l'utilisateur le valide en appuyant sur la touche "V". Le dispositif nécessite une saisie de confirmation terminée par un nouvel appui sur la touche "V" pour définitivement enregistrer le code confidentiel.

Ensuite, l'utilisateur peut enregistrer dans le dispositif les données telles que numéros de comptes, organismes correspondants et/ou tout autre numéro et libellé correspondant.

La séquence d'enregistrement commence par l'appui sur la touche "E" puis la saisie du code confidentiel. La saisie des données proprement dite peut alors commencer par la saisie sur le clavier 2 du libellé en mode alphabétique, validé par l'appui sur la touche "V". Après cette validation, l'afficheur 5 affiche le code "C" suivi du numéro d'ordre de la donnée en cours d'enregistrement, la saisie se poursuivant par la saisie du chiffre ou code correspondant lui aussi validé par l'appui sur la touche "V".

Lors de la saisie d'un code, il est possible de se déplacer en utilisant les touches fléchées de navigation.

Une fois l'enregistrement terminé, il est possible de sortir du mode d'enregistrement en appuyant une nouvelle fois sur la touche "E". En l'absence de saisie pendant une minute, le dispositif s'éteint de lui même, sa réactivation nécessitant de ressaisir le code confidentiel.

Une fois les données saisies, celles-ci peuvent être restituées en saisissant le code confidentiel au préalable pour activer temporairement le dispositif lors de l'utilisation normale de la carte.

Selon une réalisation générale, le dispositif comporte plusieurs touches particulières activant chacune des moyens de restitution des données distincts, les moyens d'activation temporaire comprenant des moyens de détection d'appui sur l'une quelconque des touches particulière et autorisant la restitution des données par l'un des moyens de restitution distincts pendant l'appui sur ladite touche particulière. En réalisation particulière, un moyen de restitution des données est possible le dispositif comportant dans ce cas avantageusement une seule touche particulière.

Pour ce faire le dispositif comporte des moyens d'activation temporaire constitués par un programme de détection par les moyens de traitement 4 d'une séquence de codes entrée sur les moyens de saisie 2, de comparaison par les moyens de traitement 4 de ladite séquence avec une séquence mémorisée dans lesdits moyens de mémorisation 3c ce programme n'autorisant l'activation par les moyens de traitement 4 des moyens de restitution afficheur 5, vibreur 6 dans le cas des exemples des figures 2a, 2c, liaison externe 16 dans le cas des figures 2b, 2c et 2d et interface audio 36 dans le cas de la figure 2c qu'après reconnaissance par les moyens de traitement 4 de l'identité entre la séquence de codes entrés sur les moyens de saisie, le clavier 2, et la séquence de codes mémorisée comme code confidentiel.

Lors de la saisie du code confidentiel, l'affichage affiche des étoiles pour confirmer la saisie. Le programme de détection peut comporter une séquence de désactivation de la carte en cas de saisie multiple de codes erronés pour accroître la sécurité du dispositif. Pour ce faire, les moyens de traitement 4 de l'identité entre la séquence de codes entrés et la séquence de codes mémorisés sont notamment combinés avec des moyens d'effacement des données par exemple un générateur de tension d'effacement si la mémoire contenant les données est une mémoire de type électriquement effaçable et programmable (EEPROM selon l'acronyme anglo-saxon) activés sur l'occurrence d'un nombre d'entrée de codes erronés par exemple suite à l'entrée de trois codes erronés.

Les moyens d'effacement des données peuvent être remplacés par des moyens de déclenchement d'une séquence de destruction des moyens de mémorisation 3a, 3b et/ou 3c ainsi qu'éventuellement des moyens de traitement 4 sur l'occurrence d'un nombre d'entrées de codes erronés ou sur la saisie d'une séquence particulière, par exemple des moyens tels qu'un générateur de surtension intégré à l'alimentation commandée 30.

Lorsque la saisie du code confidentiel a été correctement effectuée, le dispositif est prêt à restituer les données mémorisées.

Dans le cas d'une restitution des données sur l'afficheur 5, ces données peuvent soit s'afficher en une fois (par exemple la totalité d'un code numérique s'affiche) soit par défilement unitaire des données sur l'afficheur 5, chaque chiffre du code s'affichant seul puis étant remplacé par un autre chiffre du code, notamment pour un code à p chiffres un chiffre d'ordre n du code étant remplacé par un chiffre d'ordre n+1 à l'affichage, ce afin d'éviter qu'un tiers puisse lire le code pendant son affichage, l'affichage du code étant par exemple réalisé en boucle tant qu'une touche de validation reste appuyée comme décrit ci-dessous.

Un deuxième élément de sécurité est constitué par le fait que le dispositif est configuré pour ne restituer les codes que de manière temporaire et sous condition d'appui sur une touche particulière de validation. Pour ce faire, les moyens d'activation temporaire comprennent des moyens de détection d'appui sur au moins une touche particulière du dispositif reliés aux moyens de traitement 4. Dans le cadre de l'exemple représenté en figure 2a, les moyens de détection d'appui sont des interrupteurs 8, 9 commandés par les touches de validation 12, 13 et reliés à une entrée des moyens de traitement ou microprocesseur 4.

Plusieurs possibilités existent pour le fonctionnement du dispositif.

En premier mode de réalisation, l'appui sur les touches 12 ou 13 ferme les interrupteurs 8 ou 9 ce qui est détecté par le dispositif d'alimentation commandée qui laisse alors passer le courant d'alimentation de la batterie 21 ou des panneaux solaires 20 régulé par un régulateur 32 vers la carte et notamment vers les moyens de traitement 4 et l'afficheur 5.

Pour éviter toute coupure intempestive sur un relâchement involontaire temporaire de l'appui sur les touches de validation, le dispositif d'alimentation commandée comporte, selon les exemples représentés, un dispositif anti-rebonds 31.

De même, avantageusement, les moyens d'activation temporaire comportent un dispositif de temporisation, par exemple intégré dans le dispositif d'alimentation 30 ou dans les moyens de traitement 4, limitant le temps pendant lequel l'appui sur une touche particulière 12, 13, 17, 37 valide les moyens de restitution 5, 6, 16, 36.

Ainsi si un tiers se saisissait du dispositif ou forçait l'utilisateur à conserver les doigts appuyés sur le dispositif, la restitution des information serait tout de même stoppée.

Cette configuration permet de stopper pratiquement instantanément toute restitution si l'utilisateur relâche sa pression, par exemple dans le cas où un tiers essaie de lui prendre le dispositif des mains où si l'utilisateur s'aperçoit qu'un tiers tente de lire les données affichées à l'écran.

Dans ce cas dès que la touche est relâchée, le dispositif est mis hors tension et doit être réactivé par une nouvelle saisie du code confidentiel.

En alternative, le dispositif peut être pourvu d'un système piloté par les moyens de traitement qui détectent l'appui sur la touche particulière par une liaison 22, 23 et activent un circuit de pilotage 11 de l'alimentation et les moyens de restitution pour autoriser la restitution des données sur l'afficheur 5 ou le vibreur 6 tant que la touche de validation appuyée 12 ou 13 n'est pas relâchée au delà d'un temps minimum.

Dans le cadre de l'invention, la ou les touches particulières sont des touches de type bouton-poussoir nécessitant un appui maintenu pour être activées, les moyens de détection d'appui ne permettant la restitution de données mémorisées par les moyens de restitution 5, 6, 16 ou 36 que pendant l'appui sur l'une des touches particulières 12, 13, 17, 37.

L'exemple de réalisation du dispositif représenté par le schéma de la figure 2a comporte les touches particulières 12, 13 et les circuits de détection 8 et 9 correspondants.

La première touche particulière 12 est utilisée pour permettre l'activation de l'afficheur 5, le dispositif restituant alors les données visuellement. Cette touche active le dispositif d'alimentation et envoie une information d'appui par la voie 23 vers les moyens de traitement 4 pour mettre en fonction l'afficheur 5.

La seconde touche particulière 13 active un second mode de restitution des données dans lequel les moyens de restitution des données comprennent un générateur d'impulsions tactiles 6 constitué par exemple par un générateur piézoélectrique et combiné à la touche 13 ce générateur étant activé lors de l'appui sur cette dernière.

Le générateur d'impulsions tactiles est commandé par les moyens de traitement au travers d'un composant de pilotage 33.

Lorsque l'utilisateur choisit d'appuyer sur la touche 13, les données sont restituées sous formes d'impulsions tactiles générées par le générateur 6. Lors de la restitution, les chiffres sont traduits en séquences de vibrations que l'utilisateur ressent sous son doigt lors de l'appui sur la touche 13.

Les intervalles entre chiffres sont matérialisés par des intervalles plus longs que la succession d'impulsions constituant un chiffre donné et peuvent être confirmés par l'affichage d'une étoile sur l'afficheur.

Ainsi l'exemple représenté en figure 1a et figure 2a est un dispositif double comportant une première touche particulière 12 et une seconde touche particulière 13, les moyens d'activation temporaire comprenant des moyens 8 de détection d'appui sur la première touche particulière 12, des moyens 9 de détection d'appui sur la seconde touche particulière 13, la première touche particulière 12 autorisant l'affichage des données pendant son appui tandis que la seconde 13 active le générateur d'impulsions 6.

Selon l'exemple, les touches particulières 12, 13 sont des touches de gestion d'une alimentation commandée 30 du dispositif, et sont reliées au travers d'un dispositif anti-rebonds au dispositif d'alimentation commandée 30 permettant l'alimentation de la carte électronique du dispositif à partir de la batterie 21 ou des cellules photo-électriques 20.

La batterie 21 peut être chargée par les cellules photo-électriques pour fournir une charge d'appoint ou être remplacée par une pile.

L'invention n'est pas limitée à l'exemple représenté et notamment l'afficheur 5 peut être déporté dans le volet 14 et le clavier peut comporter un nombre de touches réduit ou accru.

Pour sécuriser la carte, les composants du dispositif tels que mémoire 3a, 3b, 3c, moyens de traitement 4, composant(s) de pilotage 11, 15, 33, d'alimentation 30, 31, 32 disposés dans le boîtier sont noyés dans un ou plusieurs matériaux d'encapsulage évitant un démontage du dispositif ce qui interdit tout accès à l'électronique et/ou tout accès aux données sans dommage destructif à la carte.

L'exemple de la figure 2b concerne une variante du dispositif pour laquelle une touche particulière 17 associée a un circuit de détection 18 restitue les données vers un appareil externe A au travers d'une liaison externe 16.

L'appareil externe peut être un terminal de paiement ou une borne interactive. Selon ce mode de réalisation, le dispositif 1 comporte un circuit 15 tel qu'un circuit de communication par liaison série, USB ou autre pilotant une liaison externe 16 ainsi qu'une touche particulière 17, de validation de transaction sur la liaison externe 16.

Selon ce mode de réalisation, l'utilisateur avant d'effectuer un retrait par exemple, valide une fonction de clé d'accès sur le dispositif 1 par une touche particulière 17 ACCES CLEF, reliée aux moyens de traitement par une liaison 18.

Pour ce faire, l'utilisateur tape son code personnel, puis recherche et choisit par menu déroulant via les touches de navigation du dispositif la carte de crédit, de débit ou autre qu'il souhaite utiliser et valide cette dernière par appui sur la touche V.

Tout en maintenant la touche ACCES CLEF 17, l'utilisateur introduit sa carte de crédit ou de débit dans l'appareil puis introduit le dispositif dans un lecteur correspondant dans l'appareil ou établit la liaison par tout autre moyen, liaison infrarouge par exemple, ce qui valide une fonction de transmission de données au travers de la liaison 16, le dispositif délivrant alors à l'appareil le code confidentiel de la carte.

Selon ce principe, le dispositif est assimilable à un clavier de saisie déporté pour éviter à l'utilisateur de taper son code confidentiel sur le clavier fixe et visible de tous de l'appareil A de type distributeur de billets ou autre.

Ce mode de fonctionnement permet de faire bénéficier l'utilisateur de la sécurité globale du dispositif pour ses transactions sur des appareils publics et notamment d'interdire la possibilité pour un tiers d'intercepter le code secret et de permettre l'arrêt de la restitution du code en cas de relâchement de pression sur la touche 17.

L'exemple de la figure 1b correspond à un mode de réalisation combinant les fonctions de la figure 2a et de la figure 2b à savoir affichage sur appui d'une touche d'accès visuel 12, tactile avec une touche tactile 13, par liaison externe avec la touche 17

Selon ce mode de réalisation l'utilisateur a le choix entre trois accès possibles, accès visuel, touche 12 (AV), accès tactile, touche 13 (AT), accès clé, touche 17 (AC) qui lui permettent de choisir le moyen le plus sûr de consulter et/ou d'utiliser ses codes confidentiels en fonction des circonstances.

Le schéma de la figure 2c correspond à une version similaire à laquelle est ajouté un mode de restitution audio comprenant des moyens 34, 35, 36 de génération d'un signal audio et une touche particulière 37, de validation d'une émission audio de codes saisis.

Cette version est caractérisée par l'ajout d'une touche particulière 37 associée à un circuit de détection 38 de l'appui sur cette touche, d'un module 34 audio piloté par les moyens de traitement et d'une interface audio 35 alimentant un transducteur audio 36.

Lorsque l'utilisateur appui sur la touche 37, la fonction de restitution audio est validée et, après entrée du code confidentiel et entrée de l'information permettant de ressortir le code à délivrer, le dispositif délivre ce code sur le transducteur 36 par génération vocale réalisée au niveau du module audio 34.

Une variante du dispositif de restitution par liaison externe est décrite en figure 2d.

Selon cette variante, le dispositif programmable sécurisé de stockage et de restitution de données comporte un boîtier 1 pourvu de moyens de saisie 2 constitués par un clavier, de mémorisation 3a, 3b, 3c, de traitement 4 et de restitution de données constitués uniquement d'une sortie d'une liaison externe 16.

Le dispositif comporte là encore des moyens d'activation temporaire des moyens de restitution de données 16 lors de l'appui sur une touche particulière 17 de validation de la transmission par la liaison d'un code tapé sur le clavier.

Selon cet exemple l'afficheur 5' ne restitue pas le code mais n'affiche qu'un chiffre ou caractère correspondant au numéro d'ordre du code tapé pour guider l'utilisateur.

Une fois le code tapé, l'utilisateur introduit le dispositif dans un lecteur de l'appareil A ce qui déclenche la transaction de transfert du code.

En retour l'appareil A peut transférer des données relatives à la transaction dans le dispositif, par exemple le montant retiré si l'appareil est un distributeur de billets.

Selon ce mode de réalisation, l'utilisateur utilise le dispositif comme une clé de saisie, de mémorisation temporaire d'un code et de transfert d'un code tel qu'un code confidentiel de carte de paiement ou de débit vers un appareil externe A et fonctionne comme une clé numérique permettant, après la saisie du code et tout en maintenant l'appui sur la touche 17, l'introduction de la clé dans un moyen de connexion de l'appareil A et la transmission cryptée ou non du code.

Dans cet exemple, le dispositif est uniquement programmé pour mémoriser temporairement un code tapé sur le clavier et le restituer au travers de la liaison 16 lors de la connexion à l'appareil externe A.

Dès que l'utilisateur relâche la touche 17 ou après la fin de la transaction, les moyens de traitement 4 effacent les données du code mémorisé par exemple dans la mémoire 3a pour éviter que ce code puisse être relu par un tiers.

Ainsi, le dispositif devient un dispositif de stockage et de restitution temporaire d'un code secret évitant à l'utilisateur de taper son code directement sur un terminal de saisie à la vue de tous. Selon cette configuration, l'afficheur 5' ne constitue plus qu'une aide dénombrant le nombre de chiffres du code tapé.

L'invention n'est pas limitée aux exemples représentés et notamment les moyens de restitution décrits peuvent être combinés à d'autres moyens de restitution, des moyens de protection complémentaires tels que des dispositif restreignant le champ de vision de l'afficheur 5 pouvant en outre être prévus.

Le dispositif peut en outre être intégré à un appareil tel qu'un assistant personnel ou un téléphone cellulaire ou autre et ainsi constituer une fonction de ces derniers.

## Revendications

1. Dispositif programmable sécurisé de stockage et de restitution de données comportant un boîtier (1) pourvu de moyens de saisie (2), de moyens de mémorisation (3a, 3b, 3c), de moyens de traitement (4) des données et de moyens de restitution de données (5, 6, 16, 36), pourvu en outre de moyens de liaison (7) entre lesdits moyens de saisie (2), de mémorisation (3a, 3b, 3c), de traitement (4) et de restitution de données (5, 6, 16, 36), **caractérisé en ce qu'**il comprend des moyens d'activation temporaire des moyens de restitution de données (5, 6, 16, 36).

2. Dispositif selon la revendication 1 **caractérisé en ce que** les moyens de restitution de données comprennent un afficheur (5).

3. Dispositif selon la revendication 2 **caractérisé en ce qu'**un mode de restitution des données se fait par défilement unitaire des données sur l'afficheur, un chiffre d'ordre n du code étant remplacé par un chiffre d'ordre n+1 à l'affichage.

4. Dispositif selon l'une quelconque des revendications 1 à 3 **caractérisé en ce que** les moyens d'activation temporaire comprennent des moyens de détection par les moyens de traitement (4) d'une séquence de codes entrée sur les moyens de saisie (2), la comparaison par les moyens de traitement (4) de ladite séquence avec une séquence mémorisée dans lesdits moyens de mémorisation (3a, 3b, 3c) et l'activation par les moyens de traitement (4) des moyens de restitution (5, 6, 16, 36) uniquement sur reconnaissance par les moyens de traitement (4) de l'identité entre la séquence de codes entrés et la séquence de codes mémorisée.

5. Dispositif selon la revendication 4 **caractérisé en ce que** les moyens de traitement (4) de l'identité entre la séquence de codes entrés et la séquence de codes mémorisés sont combinés avec des moyens d'effacement des données activés sur l'occurrence d'un nombre d'entrée de codes erronés.

6. Dispositif selon la revendication 4 ou 5 **caractérisé en ce que** le dispositif comporte des moyens de déclenchement d'une séquence de destruction des moyens de mémorisation (3a, 3b, 3c) et/ou des moyens de traitement (4).

7. Dispositif selon l'une quelconque des revendications précédentes **caractérisé en ce que** les moyens d'activation temporaire comprennent des moyens (8, 9, 18, 38) de détection d'appui sur au moins une touche particulière (12, 13, 17, 37) du dispositif reliés aux moyens de traitement (4), lesdits moyens de détection d'appui (8, 9, 18, 38) ne permettant la restitution de données mémorisées par les moyens de restitution (5, 6, 16, 36) que pendant l'appui sur ladite touche particulière (12, 13, 17, 37).

8. Dispositif selon l'une quelconque des revendications précédentes **caractérisé en ce que** les moyens de restitution des données (5, 6, 16, 36) comprennent un générateur d'impulsions tactiles (6).

9. Dispositif selon les revendications 7 et 8 **caractérisé en ce que** le générateur d'impulsions tactiles (6) est combiné avec ladite touche particulière (13).

10. Dispositif selon la revendication 7 **caractérisé en ce qu'**il comporte plusieurs touches particulières activant chacune des moyens de restitution des données distincts (5, 6, 16, 36), les moyens d'activation temporaire comprenant des moyens (8, 9, 18, 38) de détection d'appui sur l'une quelconque des touches particulière et autorisant la restitution des données par l'un des moyens de restitution distincts pendant l'appui sur ladite touche particulière.

11. Dispositif selon l'une quelconque des revendications 7 à 10 **caractérisé en ce que** la ou les touches particulières (12, 13, 17, 37) sont des touches de gestion d'un dispositif d'alimentation commandée (30) du dispositif.

12. Dispositif selon l'une quelconque des revendications précédentes **caractérisé en ce que** les composants le constituant sont noyés dans un ou plusieurs matériaux d'encapsulage évitant un démontage du dispositif et tout accès aux données.

13. Dispositif selon l'une quelconque des revendications précédentes **caractérisé en ce qu'**il comprend une liaison externe (16), et une touche particulière (17), de validation d'une transaction vers un appareil externe au travers de la liaison externe (16).

14. Dispositif selon l'une quelconque des revendications précédentes **caractérisé en ce qu'**il comprend des moyens (34, 35, 36) de génération d'un signal audio et une touche particulière (37), de validation d'une émission audio de codes saisis.

15. Dispositif selon la revendication 7 **caractérisé en ce que** les moyens d'activation temporaire comportent un dispositif de temporisation limitant le temps pendant lequel l'appui sur une touche particulière (12, 13, 17, 37) valide les moyens de restitution (5, 6, 16, 36).
